(19) Europäisches Patentamt
European Patent Office
Office européen des brevets

(11) **EP 1 744 827 B1**

(12) **EUROPÄISCHE PATENTSCHRIFT**

(45) Veröffentlichungstag und Bekanntmachung des Hinweises auf die Patenterteilung:
**09.03.2011  Patentblatt 2011/10**

(21) Anmeldenummer: **05738390.3**

(22) Anmeldetag: **26.04.2005**

(51) Int Cl.:
**B01F 17/00** *(2006.01)*      **C11D 1/722** *(2006.01)*

(86) Internationale Anmeldenummer:
**PCT/EP2005/004461**

(87) Internationale Veröffentlichungsnummer:
**WO 2005/105285 (10.11.2005 Gazette 2005/45)**

(54) **SCHNELLE SCHAUMARME NETZER FÜR HYDROPHOBE OBERFLÄCHEN**

RAPID LOW-FOAM WETTING AGENTS FOR HYDROPHOBIC SURFACES

AGENTS MOUILLANTS FAIBLEMENT MOUSSANTS ET AGISSANT RAPIDEMENT, DESTINES A DES SURFACES HYDROPHOBES

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **30.04.2004  DE 102004021434**

(43) Veröffentlichungstag der Anmeldung:
**24.01.2007  Patentblatt 2007/04**

(73) Patentinhaber: **BASF SE**
**67056 Ludwigshafen (DE)**

(72) Erfinder:
• **STEINBRENNER, Ulrich**
**67435 Neustadt (DE)**
• **KLINGELHÖFER, Paul**
**68165 Mannheim (DE)**
• **TROPSCH, Jürgen**
**67354 Römerberg (DE)**

(56) Entgegenhaltungen:
**EP-A- 0 681 865      EP-A- 0 845 449**
**WO-A-2004/005230**

**Beschreibung**

Die vorliegende Erfindung betrifft ein Netzmittel enthaltend Tenside basierend auf einem $C_8$-Alkohol, Propylenoxid und Ethylenoxid bzw. auf Propylenoxid allein, und einen $C_8$-Alkohol.

Tenside basierend auf $C_8$-Alkoholen, Propylenoxid und Ethylenoxid sind aus dem Stand der Technik bereits bekannt.

DD 292147 beschreibt ein Netzmittel für schwer benetzbare Stäube wie zum Beispiel Kohlenstaub aus einem Alkylpolyalkylenglykolether beinhaltend Ethylenoxid und Propylenoxid. Bevorzugt wird dazu ein Netzmittel der Formel 2-Ethylhexanol-$(PO)_{2,5-3,5}$-$(EO)_{2-3}$ eingesetzt. Kohlenstaub ist als hocharomatische Oberfläche nicht ohne weiteres auf jede technische Anwendung übertragbar. Das Netzmittel ist in Gegenwart von konzentrierten Salzlösungen wirksam, schäumt nicht und weist kurze Netzzeiten auf.

DD 298651 beschreibt $C_6$-$C_9$-Alkohol-Propoxylat-Ethoxylate als Emulgatoren für Silikone. Die genannten Verbindungen werden zur Herstellung von lagerstabilen wässrigen Diorganopolysiloxanemulsionen mit Lagerzeiten von 6 Monaten eingesetzt.

In EP 0051 878 A1 wird eine flüssige, nicht schäumende, nicht ionische Tensidzusammensetzung offenbart, welche verbesserte Benetzungseigenschaften und allgemein gute Entfettungs- und/oder Reinigungseigenschaften aufweist. Die Zusammensetzung beinhaltet eine Verbindung aufgebaut aus einem Alkohol mit 7 bis 11 Kohlenstoffatomen und Ethylen- und Propylenoxid-Einheiten.

In WO 2004/005230 werden Alkoxylate von 2-Ethylhexanol beschrieben, die als Alkylenoxide Ethylen- und Propylenoxid beinhalten. Durchschnittlich liegen in den offenbarten Verbindungen 1,6 bis 3,3 Einheiten Propylenoxid und daran anschließend 3,0 bis 5,5 Einheiten Ethylenoxid vor. Die Alkoxylate werden als Reinigungsmittel für harte Oberflächen verwendet.

Aufgabe der vorliegenden Erfindung ist es, geeignete Tenside für die Verwendung als Netzmittel für hydrophobe Polymeroberflächen bereit zu stellen.

Diese Aufgabe wird gelöst durch ein
Netzmittel, enthaltend

    a) 0,5 bis 50 Gew.-% wenigstens eines Tensids der allgemeinen Formel (I)

$$R\text{-}O\text{-}(A)_n\text{-}(B)_m\text{-}H \qquad (I),$$

    worin

    R    $C_8$-Alkylrest,
    A    Propylenoxy,
    B    Ethylenoxy,
    n    einen mittleren Wert von 1,3 bis 1,6 und
    m    einen mittleren Wert von 2,8 bis 3,2 bedeuten,

    b) 1,5 bis 5,0 Gew.-% eines $C_8$-Alkohols und

    c) 0,5 bis 30 Gew.-% einer Verbindung der allgemeinen Formel (IV)

$$R\text{-}O\text{-}(A)_n\text{-}H \qquad (IV),$$

    worin

    R    $C_8$-Alkylrest,
    A    Propylenoxy und
    n    einen mittleren Wert von 1,3 bis 1,6 bedeuten.

Der Rest R in der allgemeinen Formel (I) ist ein linearer oder verzweigter, gesättigter oder ungesättigter $C_8$-Alkylrest, bevorzugt ist R ein Alkylrest, der mindestens einfach verzweigt ist. Besonders bevorzugt ist R ein $C_8$-Alkykest, der einfach verzweigt ist.

In einer ganz besonders bevorzugten Ausführungsform werden Tenside erfindungsgemäß verwendet, in denen R der von 2-Ethylhexanol abgeleitete Alkylrest ist.

In der allgemeinen Formel (I) bedeutet A Propylenoxy. Erfindungsgemäß steht Propylenoxy für die Gruppen -O-$CH_2$-$CH(CH_3)$- oder -O-$CH(CH_3)$-$CH_2$-. In den erfindungsgemäß verwendeten Tensiden sind direkt an den Alkohol idealerweise ausschließlich Propylenoxy-Einheiten gebunden.

In der allgemeinen Formel (I) bedeutet B Ethylenoxy. Erfingdungsgemäß steht Ethylenoxy für die Gruppe -O-CH$_2$-CH$_2$-.

Das Tensid hat idealerweise eine Blockstruktur, d.h. ein Propylenoxy-Block ist direkt an den C$_8$-Alkohol gebunden. Daran anschließend ist ein Ethylenoxy-Block gebunden.

Als technisches Tensid ist diese Blockstruktur gegebenenfalls etwas durchbrochen, wenn aus verfahrenstechnischen Gründen die Ethylenoxid-Dosierung gestartet wird, obschon noch nicht alles Propylenoxid mit dem Alkohol abreagiert hat.

In dem erfindungsgemäß verwendeten Tensid der allgemeinen Formel (I) bedeutet n den mittleren Wert der Anzahl der an den C$_8$-Alkohol gebundenen Propylenoxy-Einheiten.

Der Ausdruck "mittlerer Wert" bezieht sich auf technische Produkte, in denen in den Einzelmolekülen eine unterschiedliche Anzahl von Alkylenoxy-Einheiten vorliegen kann. Er beschreibt den in technischen Produkten im Mittel vorliegenden Anteil der entsprechenden Alkylenoxy-Einheiten. Ein Wert von 0,5 bedeutet beispielsweise, dass im Mittel jedes zweite Molekül eine entsprechende Einheit trägt.

Erfindungsgemäß werden Tenside verwendet, in denen n einen mittleren Wert von 1,3 bis 1,6 aufweist.

In dem erfindungs gemäß verwendeten Tensid der allgemeinen Formel (I) bedeutet m den mittleren Wert der Anzahl der im Tensid enthaltenen Ethylenoxy-Einheiten.

Erfindungsgemäß werden Tenside verwendet, in denen m einen mittleren Wert von 2,8 bis 3,2 aufweist.

Die Tenside der allgemeinen Formel (I) vereinen sehr gute Eigenschaften bezüglich Schaumarmut, biologischer Abbaubarkeit und Netzgeschwindigkeit auf hydrophoben Polymeroberflächen, so dass sie erfindungsgemäß als Netzmittel für hydrophobe Polymeroberflächen verwendet werden.

Für die den erfindungsgemäßen Alkoholalkoxylaten zu Grunde liegende Alkholkomponente ROH kommen nicht nur reine C$_8$-Alkohole in Betracht, sondern auch Mischungen verschiedener Isomerer eines C$_8$-Alkohols. Beispielhaft sei eine Mischung verschiedener Konstitutionsisomerer genannt. Bevorzugt liegt als Alkoholkomponente nur ein Isomer eines C$_8$-Alkohols in den erfindungsgemäß verwendeten Tensiden der allgemeinen Formel (I) vor.

Die vorstehenden erfindungsgemäß verwendeten Tenside oder Gemische von Tensiden werden vorzugsweise hergestellt durch Umsetzung von Alkoholen der allgemeinen Formel ROH oder Gemischen entsprechender isomerer C$_8$-Alkohole, zuerst mit Propylenoxid und sodann mit Ethylenoxid. Die Alkoxylierungen werden dabei vorzugsweise in Gegenwart von Alkoxylierungskatalysatoren durchgeführt. Dabei werden insbesondere basische Katalysatoren wie Kaliumhydroxid und/oder Natriumhydroxid eingesetzt. Durch spezielle Alkoxylierungskatalysatoren wie modifizierte Bentonite oder Hydrotalcite, wie sie beispielsweise in WO 95/04024 beschrieben sind, kann die statistisch Verteilung der Mengen der eingebauten Alkylenoxide stark eingeengt werden, so dass man "Nazrow-range"-Alkoxylate erhält.

Entsprechende Reaktionsbedingungen, wie Temperatur, Druck, Reaktionsdauer, Lösungsmittel, Aufarbeitung und Reinigung der Produkte u.a. sind dem Fachmann bekannt. Ebenso sind geeignete Reaktoren für die Herstellung der erfindungsgemäß verwendbaren Tenside dem Fachmann bekannt.

In einer bevorzugten Ausführungsform der vorliegenden Erfindung werden Tenside als Netzungsmittel von hydrophoben Polymeroberflächen verwendet, wobei die Tenside eine Netzleistung $NL_{PE}$ gemäß der allgemeinen Formel (II)

$$NL_{PE} = \frac{\cos \varphi_{Tensidlösng.10s} - \cos \varphi_{dest.Wasser}}{1 - \cos \varphi_{dest.Wasser}} \text{ (II);}$$

wobei

φTensidlösung, 10s      Randwinkel eines Tropfens einer 0,02 gew.-%igen, wässrigen Tensidlö- sung bei 40 °C auf einer Polyethylenoberfläche 10 Sekunden nach dem Auftreffen des Tropfens, und

φdest. Wasser      Randwinkel eines Tropfens destillierten Wassers bei 40 °C auf einer Polyethylenoberfläche 10 Sekunden nach dem Auftreffen des Tropfens

bedeuten, von > 0.41 aufweisen.

Besonders bevorzugt besitzen die erfindungsgemäß verwendeten Netzmittel Netzleistungen $NL_{PE}$ von > 0.48, ganz besonders Bevorzugt > 0.52, insbesondere bevorzugt > 0.58,

Definition der Netzleistung $NL_{PE}$ für hydrophobe Polymeroberflächen:

Die Netzleistung für hydrophobe Polymeroberflächen wird über den Randwinkel eines Tropfens einer 0,02 gew. %igen, wässrigen Tensidlösung bei 40 °C auf einer Polymethylenoberfläche 10 Sekunden nach dem Auftreffen des Tropfens ermittelt. Als Referenz dient ein analoges Experiment mit destilliertem Wasser.

In einer weiteren bevorzugten Ausführungsform der vorliegenden Erfindung werden Tenside als Netzmittel von hydrophoben Polymeroberflächen verwendet, wobei die Tenside eine Netzgeschwindigkeit $NG_{PE}$ gemäß der allgemeinen Formel (III)

$$NG_{PE} = \frac{\cos\varphi_{Tensidlösung, 50ms} - \cos\varphi_{dest. Wasser}}{1 - \cos\varphi_{dest. Wasser}} \bullet \frac{1}{NL_{PE}} \quad (III),$$

von > 0.85 aufweisen, wobei $\varphi_{dest.\ Wasser}$ und $NL_{PE}$ wie vorstehend definiert sind, und $\varphi_{Tensid\text{-}lösung,\ 50\ ms}$ der Randwinkel eines Tropfens einer 0,02 gew.-%igen, wässrigen Tensidlösung bei 40 °C auf einer Polyethylen-Oberfläche 50 Millisekunden nach dem Auftreffen des Tropfens ist.

Besonders bevorzugt besitzen die erfindungsgemäß verwendeten Netzmittel Netzgeschwindigkeiten $NG_{PE}$ > 0.87, ganz besonders bevorzugt > 0.90, insbesondere bevorzugt > 0.92.

Definition der Netzgeschwindigkeit $NG_{PE}$ für hydrophobe Polymeroberflächen:

Die Netzgeschwindigkeit für hydrophobe Polymeroberflächen eines Tensids wird über den zeitlich fortschreitenden Randwinkel eines Tropfens einer wässrigen Tensidlösung auf einer Polyethylen-Oberfläche ermittelt. Sie errechnet sich aus den Randwinkel 50 Millisekunden nach Auftreffen des Tropfens auf die Oberfläche und der Netzleistung $NL_{PE}$ für dieselbe Oberfläche. Als Referenz dient wieder ein analoges Experiment mit destilliertem Wasser.

Im Allgemeinen können die erfindungsgemäß geeigneten hydrophoben oder hydrophobierten Polymeroberflächen aus jedem natürlichen oder künstlich hergestellten Material, oder aus Mischungen verschiedener Materialien bestehen.

Unter hydrophoben Polymeroberflächen werden beispielsweise alle hydrophoben oder hydrophobierten Bio-Polymere oder Kunststoffe verstanden.

Bevorzugt wird das erfindungsgemäße Netzmittel für hydrophobe Polymeroberflächen verwendet, die aus hydrophoben Polymeren aufgebaut sind, ausgewählt aus der Gruppe bestehend aus Baumwolle, Poly-THF-basierten Polymeren wie Lycra® oder PEEK, Polyethylen, Polypropylen, Polyamiden, Polyethern, Polycarbonaten, Polyurethanen, Gummi, Silikon, Polybutadien, Polystyrol und ABS. Weiterhin können die Tenside der allgemeinen Formel (I) als Netzmittel für Oberflächen von Pflanzen, z.B. Blätter, Nadeln, oder Tieren, z.B. Chitinpanzer von Insekten verwendet werden. Es können weiterhin auch Mischungen dieser Materialien eingesetzt werden. Besonders bevorzugt sind Polyester, Polyamid, Polypropylen, Baumwolle und Mischungen davon.

Bevorzugt wird das erfindungsgemäße Netzmittel für hydrophobe Polymeroberflächen verwendet, wobei diese ausgewählt sind aus der Gruppe bestehend aus Formteilen, Fasern, Stäuben, Granulaten, Pulvern, Folien, Geweben, Garnen. Pulver und Stäube sind dabei weniger Bevorzugt

Besonders bevorzugt sind die hydrophoben Polymeroberflächen ausgewählt aus der Gruppe bestehend aus Fasern, Garnen und Geweben.

Das erfindungsgemäße Netzmittel enthält als Komponente a) 0,5 bis 50 Gew.-%, bevorzugt 5 bis 30 Gew.%, besonders bevorzugt 8 bis 25 Gew.-% eines Tensids der allgemeinen Formel (I), Aufbau und bevorzugte Inhaltsstoffe dieses Tensids wurden vorstehend bereits erläutert.

Als Komponente b) enthält das erfindungsgemäße Netzmittel 1,5 bis 5,0 Gew.-%, besonders bevorzugt 1,5 bis 4,0 Gew.-% eines $C_8$-Alkohols. Für den $C_8$-Alkohol gilt das bereits bezüglich des Tensids der allgemeinen Formel (I) Gesagte. Die Komponente b) wirkt in dem erfindungsgemäßen Netzmittel synergistisch als Cotensid und Netzmittel.

Als Komponente c) enthält das erfindungsgemäße Netzmittel 0,5 bis 30 Gew.-%, bevorzugt 2,0 bis 20 Gew.-%, besonders bevorzugt 5 bis 15 Gew.-% einer Verbindung der allgemeinen Formel (IV)

$$R\text{-}O\text{-}(A)_n\text{-}H \qquad (IV),$$

worin

R  $C_8$-Alkylrest,
A  Propylenoxid, und

EP 1 744 827 B1

n einen mittleren Wert von 1,3 bis 1,6 bedeuten.

Der Rest R ist ein linearer oder verzweigter, gesättigter oder ungesättigter $C_8$-Alkylrest, bevorzugt ist R ein Alkylrest, der mindestens einfach verzweigt ist. Besonders bevorzugt ist R ein $C_8$-Alkykest, der einfach verzweigt ist. In einer ganz besonders bevorzugten Ausführungsform enthalten die erfindungsgemäßen Netzmittel als Komponente c) Verbindungen, in denen R der von 2-Ethylhexanol abgeleitete Alkylrest ist.

In einer bevorzugten Ausführungsform ist R in den Komponenten a) oder c) des erfindungsgemäßen Netzmittels der von 2-Ethylhexanol abgeleitete Alkylrest,

In einer besonders bevorzugten Ausführungsform leiten sich die Komponenten a), b) und c) von dem identischen $C_8$-Alkohol ab. Ganz besonders bevorzugt ist dieser $C_8$-Alkohol 2-Ethylhexanol.

Die Verbindung der allgemeinen Formel (IV) ist ein nicht ethoxyliertes, d.h. ausschließlich propoxyliertes Tensid, welches in dem erfindungsgemäßen Netzmittel als effizienter Entschäumer wirkt. Die entschäumende Wirkung ist in dem erfindungsgemäßen Netzmittel erwünscht.

In der allgemeinen Formel (IV) bedeutet A Propylenoxy. Erfindungsgemäß steht Propylenoxy für die Gruppen -O-$CH_2$-CH($CH_3$)- oder -O-CH($CH_3$)-$CH_2$-.

In den erfindungsgemäßen Netzmitteln werden als Komponente c) Verwindungen der allgemeinen Formel (IV) eingesetzt, in denen n einen mittleren Wert von 1,3 bis 1,6 aufweist. Bezüglich der Bezeichnung mittlerer Wert gilt das bereits Gesagte.

Die vorstehenden erfindungsgemäß verwendeten Tenside der allgemeinen Formel (IV) werden vorzugsweise hergestellt durch Umsetzung von Alkoholen der allgemeinen Formel ROH oder Gemischen entsprechender isomerer $C_8$-Alkohole mit Propylenoxid. Die Alkoxylierungen werden dabei vorzugsweise in Gegenwart von Alkoxylierungskatalysatoren durchgeführt. Dabei werden insbesondere basische Katalysatoren wie Kaliumhydroxid und/oder Natriumhydroxid eingesetzt. Durch spezielle Alkoxylierungskatalysatoren wie modifizierte Bentonite oder Hydrotalcite, wie sie beispielsweise in WO 95/04024 beschrieben sind, kann die statistische Verteilung der Mengen der eingebauten Alkylenoxide stark eingeengt werden, so dass man "Narrow-range"-Alkoxylate erhält.

Entsprechende Reaktionsbedingungen, wie Temperatur, Druck, Reaktionsdauer, Lösungsmittel, Aufarbeitung und Reinigung der Produkte u.a. sind dem Fachmann bekannt. Ebenso sind geeignete Reaktoren für die Herstellung der erfindungsgemäß verwendbaren Tenside dem Fachmann bekannt.

Das erfindungsgemäße Netzmittel kann durch Vermischen der Komponenten a), b) und c) in beliebiger Reihenfolge hergestellt werden, bevorzugt in Gegenwart eines geeigneten Lösungsmittels. Geeignete Lösungsmittel sind polare Lösungsmittel, beispielsweise Alkohole, Ketone, Wasser oder Salzlösungen wie wässrige Natronlauge. Es kann auch eine Mischung von Lösungsmitteln eingesetzt werden.

In einer bevorzugten Ausführungsform liegen die Komponenten a), b) und c) des erfindungsgemäßen Netzmittels in wässriger Lösung vor, d.h. als Lösungsmittel für das erfindungsgemäße Netzmittel wird Wasser eingesetzt.

Das erfindungsgemäße Netzmittel ist schaumarm. Gemäß der Schlagschaummethode EN 12728 (40 °C, 2 g/l Tensid, 10° deutsche Härte) ergeben sich für das erfindungsgemäße Netzmittel < 40 ml, bevorzugt < 30 ml, besonders bevorzugt < 20 ml, ganz besonders bevorzugt < 15 ml Schaum.

**Patentansprüche**

1. Netzmittel, enthaltend

   a) 0,5 bis 50 Gew.-% wenigstens eines Tensids der allgemeinen Formel (I)

   $$R-O-(A)_n-(B)_m-H \qquad (I),$$

   worin

   R $C_8$-Alkylrest,
   A Propylenoxy,
   B Ethylenoxy,
   n einen mittleren Wert von 1,3 bis 1,6 und
   m einen mittleren Wert von 2,8 bis 3,2 bedeuten,

   b) 1,5 bis 5,0 Gew.-% eines $C_8$-Alkohols und
   c) 0,5 bis 30 Gew.-% einer Verbindung der allgemeinen Formel (IV)

$$R\text{-}O\text{-}(A)_n\text{-}H \qquad (IV),$$

worin

R Cg-Alkylrest,
A Propylenoxy und
n einen mittleren Wert von 1,3 bis 1,6 bedeuten.

2. Netzmittel nach Anspruch 1, **dadurch gekennzeichnet, dass** R in den Komponenten a) und c) der von 2-Ethylhexanol abgeleitete Alkylrest ist.

3. Netzmittel nach Anspruch 1 oder 2, **dadurch gekennzeichnet, dass** sich die Komponenten a), b) und c) von dem identischen $C_8$-Alkohol ableiten.

4. Netzmittel nach einem der Ansprüche 1 bis 3, **dadurch gekennzeichnet, dass** die Komponenten

a) zu 5,0 bis 30 Gew.-%,
b) zu 1,5 bis 5,0 Gew.-%, und
c) zu 2,0 bis 20 Gew.-%

vorliegen.

5. Netzmittel nach einem der Ansprüche 1 bis 4, **dadurch gekennzeichnet, dass** der $C_8$-Alkohol 2-Ethylhexanol ist.

6. Netzmittel nach einem der Ansprüche 1 bis 5, **dadurch gekennzeichnet, dass** die Komponenten a), b) und c) in wässriger Lösung vorliegen.

## Claims

1. A wetting agent comprising

a) from 0.5 to 50% by weight of at least one surfactant of the general formula (I)

$$R\text{-}O\text{-}(A)_n\text{-}(B)_m\text{-}H \qquad (I)$$

where

R is a $C_8$-alkyl radical,
A is propylenoxy,
B is ethylenoxy,
n is an average value of from 1.3 to 1.6 and
m is an average value of from 2.8 to 3.2,

b) from 1.5 to 5.0% by weight of a $C_8$ alcohol and
c) from 0.5 to 30% by weight of a compound of the general formula (IV)

$$R\text{-}O\text{-}(A)_n\text{-}H \qquad (IV)$$

where

R is a $C_8$-alkyl radical,
A is propylenoxy and
n is an average value of from 1.3 to 1.6.

2. The wetting agent according to claim 1, wherein R in components a) and c) is the alkyl radical derived from 2-ethylhexanol.

**3.** The wetting agent according to claim 1 or 2, wherein components a), b) and c) derive from the identical $C_8$ alcohol.

**4.** The wetting agent according to any of claims 1 to 3, wherein the components are present to extents of

    a) from 5.0 to 30% by weight,
    b) from 1.5 to 5.0% by weight and
    c) from 2.0 to 20% by weight.

**5.** The wetting agent according to any of claims 1 to 4, wherein the $C_8$ alcohol is 2-ethylhexanol.

**6.** The wetting agent according to any of claims 1 to 5, wherein components a), b) and c) are present in aqueous solution.

**Revendications**

**1.** Agent mouillant, contenant

    a) 0,5 à 50% en poids d'au moins un agent tensioactif de formule générale (I),

$$R\text{-}O\text{-}(A)_n\text{-}(B)_m\text{-}H \qquad (I),$$

    où

    R signifie un radical $C_8$-alkyle,
    A signifie propylénoxy,
    B signifie éthylénoxy
    n vaut une valeur moyenne de 1,3 à 1,6 et
    m vaut une valeur moyenne de 2,8 à 3,2,

    b) 1,5 à 5,0% en poids d'un $C_8$-alcool et
    c) 0,5 à 30% en poids d'au moins un composé de formule générale (IV)

$$R\text{-}O\text{-} (A)_n\text{-}H \qquad (IV),$$

    où

    R signifie un radical $C_8$-alkyle,
    A signifie propylénoxy et
    n vaut une valeur moyenne de 1,3 à 1,6.

**2.** Agent mouillant selon la revendication 1, **caractérisé en ce que** R dans les composants a) et c) est le radical alkyle dérivé de 2-éthylhexanol.

**3.** Agent mouillant selon la revendication 1 ou 2, **caractérisé en ce que** les composants a), b) et c) sont dérivés d'un $C_8$-alcool identique.

**4.** Agent mouillant selon l'une quelconque des revendications 1 à 3, **caractérisé en ce que** le composant

    a) est présent à raison de 5,0 à 30% en poids
    b) est présent à raison de 1,5 à 5,0% en poids et
    c) est présent à raison de 2,0 à 20% en poids.

**5.** Agent mouillant selon l'une quelconque des revendications 1 à 4, **caractérisé en ce que** le $C_8$-alcool est le 2-éthylhexanol.

**6.** Agent mouillant selon l'une quelconque des revendications 1 à 5, **caractérisé en ce que** les composants a), b) et c) se trouvent en solution aqueuse.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DD 292147
- DD 298651
- EP 0051878 A1
- WO 2004005230 A
- WO 9504024 A